# EUROPEAN PATENT APPLICATION

(11) **EP 2 939 527 A1**
(43) Date of publication of application: **04.11.2015**
(21) Application number: 15165856.4
(22) Date of filing: 30.04.2015
(51) Int. Cl.: A01G 3/02, A01G 3/033

(54) **CUTTING SYSTEM**

(30) Priority: 30.04.2014 IT RM20140216
(71) Applicant: Cecchi, Remo Francesco, 71100 Foggia (IT)
(72) Inventor: Cecchi, Remo Francesco, 71100 Foggia (IT)
(74) Representative: Papa, Elisabetta

(57) **Abstract**

A cutting system (1, 100), in particular suitable for the pruning of a tree and/or a shrub, comprising: a shear device (2, 200) having a first (3, 300) and a second (4, 400) handle element of elongated shape, each integral, at a distal end, to a respective first (5, 500) or second (6, 600) blade, and a rotable connection between the handle elements to allow a drive of the blades according to a mutual approaching/cutting and mutual spacing motion; a rod element (12, 112) detachably connected or connectable at its first end to the said first (3, 300) and second (4, 400) handle element at respective proximal ends of them, in which the configuration is such that the rod element (12, 112) is locked or lockable to one of the aforesaid handle elements and slidably connected to the other one, so that a pulling action exerted on the rod element (12, 112) determines an approach and cutting motion of the blades.

## Description

### Technical field of the invention

The present invention relates to a cutting system, in particular to a shears for pruning a tree and/or a shrub.

### Background

In the practice of pruning, in particular in the pruning of fruit trees and/or olive trees, the experience and dexterity of the operator that performs the processing are characteristics of extreme importance for the success of the operation.

In the field of manual pruning, shears are a widely used tool for cutting the branches of bushes, shrubs or trees. Depending on the specific use, the most appropriate shears from a wide range of sizes, lengths of blade, weights and strengths, available on the market, can be chosen. Some shears are equipped with a device which controls the shear force according to the material type to be cut and there is also a version with longer handles, which allow to cut the branches of greater thickness. The disadvantage is that, while using suitable devices, the operator is often carried to exert an excessive force on the shears with the only hand which holds the same shears, or to use both hands to activate the shears when the thickness and class characteristics require it.

For the most demanding jobs, motorized shears have therefore been developed, in which the shear stress is exerted by an electric motor, while the operator controls the cut only through the actuation of a switch. The disadvantage of such solution is that the operator has no longer a way of intervening on the modulation of the shear stress, which is instead a characteristic required for a successful pruning operation. Moreover, the increased dimensions and the greater weight of the shears due to the drive motor and, for example, to a battery power supply, leads to problems both in terms of handling of the device and of excessive stresses on the operator hand during the pruning execution.

### Summary of the Invention

The technical problem posed and solved by the present invention is therefore to provide a cutting system, in particular suitable for pruning a tree and/or a shrub, which allows to overcome the above mentioned drawbacks with reference to the known art.

This problem is solved by a cutting system according to claim 1.

Preferred features of the present invention are object of the dependent claims.

The invention provides a cutting system which allows a decrease in the manual effort of the operator during the pruning.

Furthermore, the invention is suitable to be realized with reduced weight and increased maneuverability of the tool used by the operator during the pruning.

Still, the cutting system according to the present invention is particularly versatile, suitable to both manual and motorized use, depending on the specific requirements.

Advantageously, the cutting device according to the present invention may allow to work with the use of only one hand and to maintain the other hand always free.

Other advantages, features and modes of employ of the present invention will become evident from the following detailed description of some embodiments, presented by way of example and not of limitation.

### Brief description of the drawings

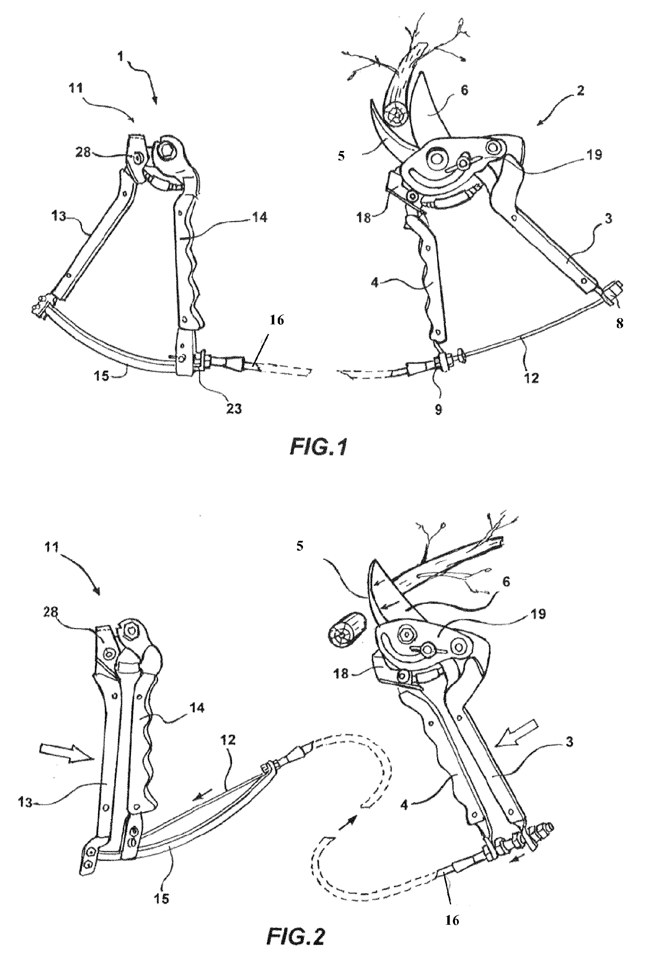

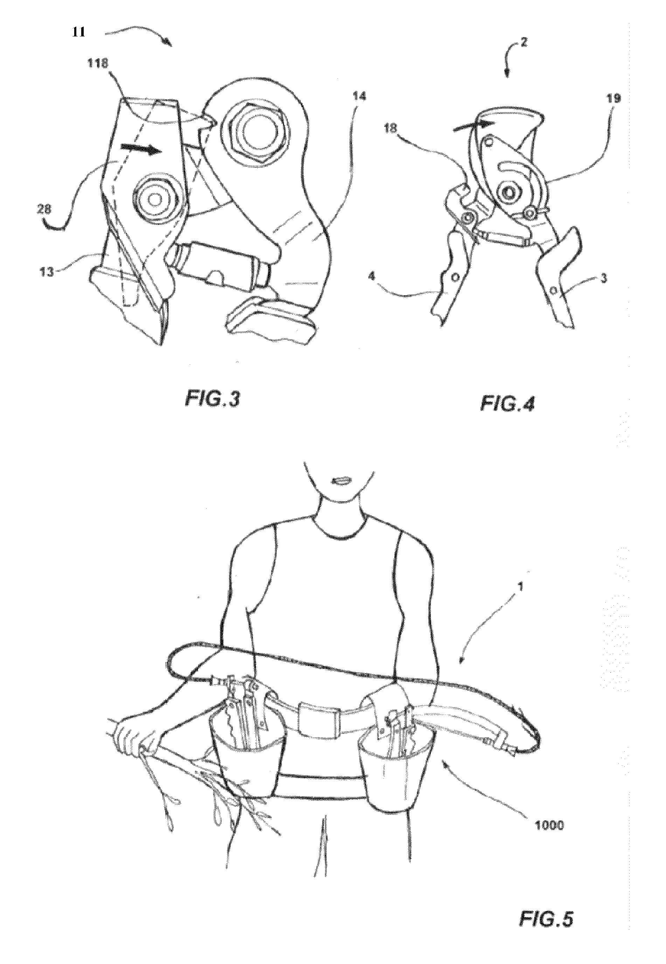

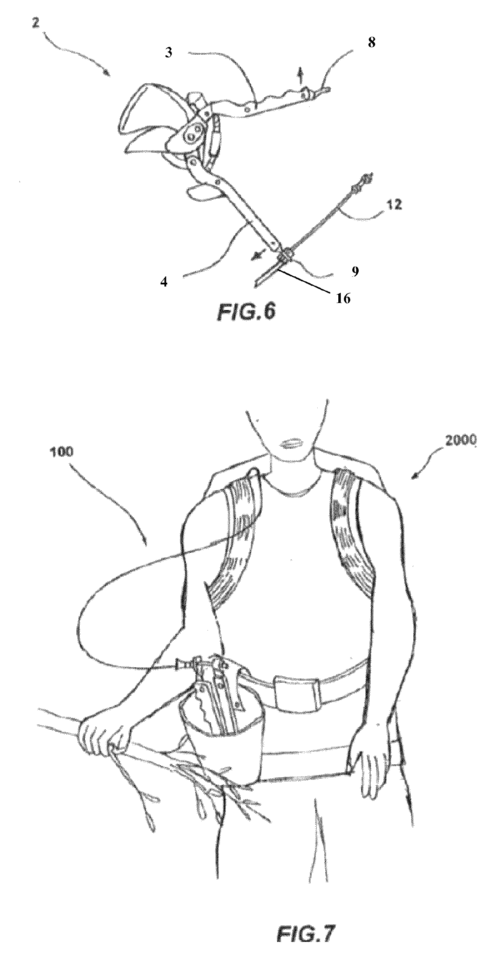

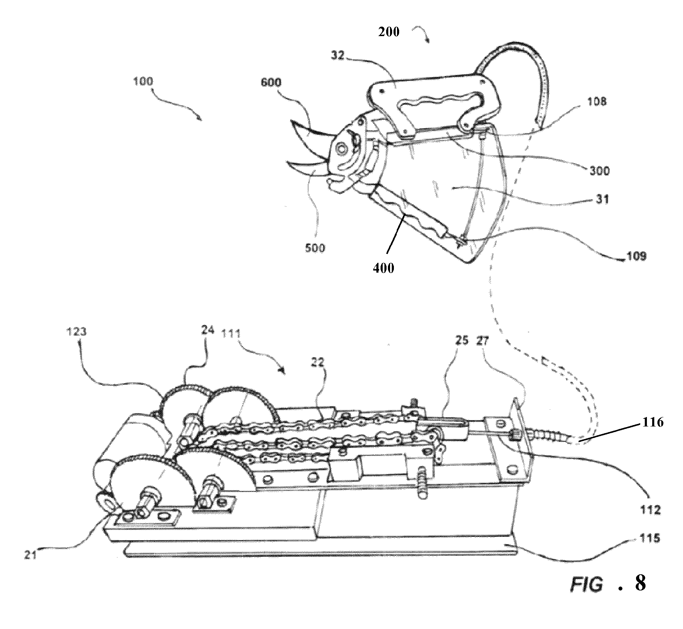

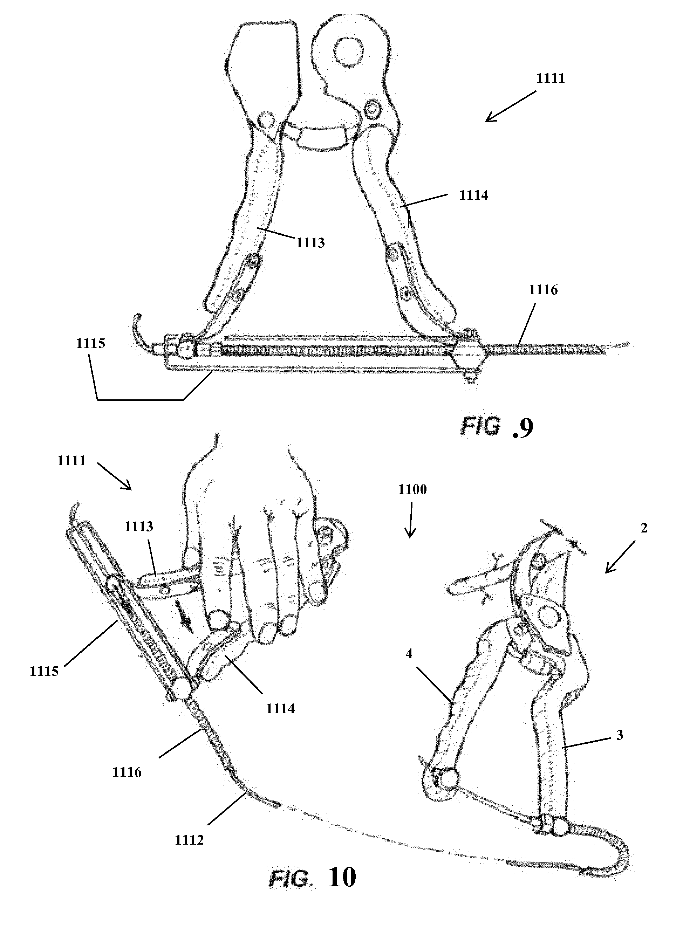

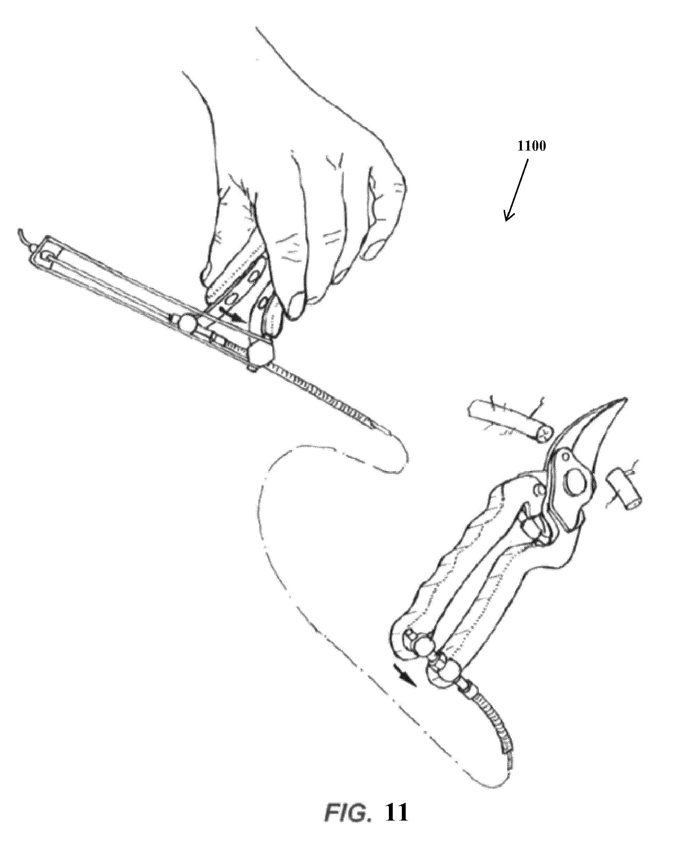

Reference will be made to the figures of the enclosed drawings, in which:
▪ Figure 1, shows a frontal view of a first preferred embodiment of the cutting system according to the present invention, in particular in a gripping configuration;
▪ Figure 2 shows the system of Figure 1, in particular in a cutting configuration;
▪ Figure 3 shows a detail of the system of Figure 1;
▪ Figure 4 shows a further detail of the system of Figure 1;
▪ Figure 5 shows the system of Figure 1, in a configuration of non-use, worn by an operator;
▪ Figure 6 shows a rear view of shears included in a variant of the cutting system of Figure 1, referring in particular to a mounting configuration;
▪ Figure 7 shows an application of a second embodiment of the cutting system according to the present invention, in a configuration of non-use and worn by an operator;
▪ Figure 8 shows a perspective view of the second embodiment of the cutting system according to the present invention;
▪ Figure 9 shows a front view of a device of manual handling, including in a third embodiment of the cutting system according to the present invention, in a non-use configuration;
▪ Figures 10 and 11 show perspective views of the third embodiment of the cutting system according to the present invention, in particular, they show two successive operation phases of this device, respectively a phase of actuation of the cutting system and a final step of cutting done.

### Detailed description of preferred embodiments

With reference to Figure 1, a cutting system according to a first preferred embodiment of the invention is generally denoted by 1.

The cutting system 1 according to the present invention is particularly suitable for the pruning of a tree and/or a shrub and comprises a shear device 2 having a first 3 and a second 4 handle element of elongated shape. Each handle element 3 and 4 is rigidly coupled, at its distal end, to a respective first 5 or second 6 blade. In particular, the first blade 5 will be called support blade and said second blade 6 will be called sharp or cutting blade.

Through the moving of the handle elements, as known, an operator can perform the pruning by adjusting the applied force depending on the specific branch to be cut, in particular through the use of only one hand. Due to the rotable connection between the above mentioned handle elements, in fact, it is enabled a drive of the blades according to a movement of mutual approaching/cutting and mutual spacing.

Advantageously, the cutting system according to the present invention also comprises a rod element 12 detachably connected or connectable, for example at its first end, to said first and second handle element 3 and 4 at respective proximal ends of the elements themselves. The configuration of the system 1 is such that the rod element 12 is locked or lockable to one of the handle elements and slidably connected to the other of these elements, so that a pulling action exerted on the rod 12 determines an approaching and cutting motion of the blades.

As shown in Figures 1 and 2, the handle elements 3 and 4 of the shear device 2 are shaped in such a way as to present connecting elements 8 and 9, in particular slotted, at proximal ends. The rod 12 is slidably mounted within the connection slotted elements and in particular is fixed at a proximal end of one of the two elements, for example of the handle element 3, which is integral with a support blade 5 . During the use of the shears, the operator moves the handle element 3, integral with the support blade 5, toward the handle element 4, integral with the cutting blade 6, to allow the cutting operation through the approach of these blades.

In the first embodiment considered here, the cutting system 1 also comprises means 11 of manual actuation of the rod element 12, adapted to exert a pulling or release action on the rod element 12 itself, thus enabling the reduction of the operator cutting effort in the use of the shear device 2.

The drive means 11, which we can also define manual handling device, are shaped to be handled by the same operator, for example in the other hand compared to that which actuates the shear device 2.

In the preferred embodiment described herein, the manual handling device 11 has a further first 13 and second 14 handle element of elongated shape, to which a rod element 12 is detachably connected or connectable, for example at a second end of the rod itself. It is also expected a rotatable connection between said further first 13 and second 14 handle element, such to allow a drive of the rod element 12 as a result of a movement of mutual approaching and of mutual spacing of said further handle elements 13 and 14.

In particular, the rod element 12 is fixed - for example by a fixing element 23 - at a proximal end of the element 14, in such a way as to be actuated by traction as a result of an approach motion of the further handle element 14 to the further element 13.

Preferably, the manual handling device 11 comprises a guide element 15, fixed at a proximal end of the further handle element 13, so as to guide the relative sliding of the further element 14 with respect to the further handle element 13, as described above. In other words, the guide element 15 is engaged to slide, externally, by the further handle element 14.

A slider sheath 16 is fixed, at its ends, respectively to a free end of the guide element 15 and to the slotted element 9, in such a way as to allow a rod element 12 sliding within the sheath 16 itself. In particular, during an approach of the element 14 to the element 13, the rod element 12 is dragged by the element 14 towards the element 13 and, by a sliding inside said sheath 16, and because of the fixing at the slotted element 8, the tensile force of the rod 12 results in a closure of the handle 3 of the cutter 2 with respect to the element 4.

In particular, the sheath 16 and the sliding rod element 12 are dimensioned - as shown also in Figure 5 - to allow a confortable manual operation of the shears 2 and the device 11 by an operator. Preferably, in use, the operator works with the sheath and the cable positioned below an operational altitude of the hands, allowing advantageously both to ensure comfortable working conditions and to reduce possible undesirable stresses on the operator limbs.

In use, the force exerted by the operator on the handle of the handling device 11 is transmitted to the shears 2. In particular, this force is added to that exerted by the operator on the shears 2, allowing, advantageously, a reduction of the force to be applied on the shears 2, with equal cutting force required for a certain pruning operation. In this way, the manual pruning machining is made less demanding for the operator.

The manual handling device 11, as well as the shear device 2, provide an elastic element of a known type, for example a spring, positioned between the handle elements, adapted to allow the repositioning of the same elements in an opening configuration following the closing action exerted by the operator.

As shown in Figure 4, preferably the shear device 2 is provided with a cover-blade element 19, shaped to cover a cutting edge of the blade 6 in a configuration of non-use of the device itself. The cover-blade 19 is adapted to be rotated around a fixed pin to move in a configuration of non-interference with the cutting edge of the blade 6, to allow the cut during pruning operations.

Always as visible in Figure 4, on the basis of variants of preferred embodiments, the shear device 2 also comprises a safety flap 18 for locking the rotatable connection between the handle elements 3 and 4.

As shown in Figure 3, preferably the manual handling device 11 provides a further safety flap 28 for locking the rotatable connection between the additional first 13 and second 14 handle element. In particular, in correspondence of a head end of the device is provided a seat 118, for example a notch, in which flap 28 abuts in abutment for locking the possibility of mutual rotation between the above elements 13 and 14. Advantageously, the locking of the movement device in a closed configuration involves the locking of the shears 2 in its closed configuration and the impossibility of use due the maintaining of the rod element 12 in traction.

As shown in Figure 6, by removal of rod 12 fixing elements, it is possible to disconnect the rod 12 itself from the elements 8 and 9. With a mounting of the rod 12 different from the one described above, you can use the shear device 2 according to a second embodiment of the present invention, which will be described to follow.

In the following, further embodiments and variants of the system of the invention will be described. The components common to the embodiments and variants already considered will not be described again. In some cases, these common elements will be indicated with a different numbering for easing their identification, for example in Figures 7 to 11.

As shown in Figure 8, the handle elements 300 and 400 of the shear device 200 are shaped in a such a manner that they present connecting elements 108 and 109, in particular slotted shaped, at the proximal ends. The rod 112 is slidably mounted within the slotted connecting elements, in particular is fixed at a proximal end of the handle element which is integral with a cutting blade or a blade for cutting 600.

In this way, during the use of the shears, the handle element 400, integral with a cutting blade 600, is moved towards the handle element 300, integral with the support blade 500, to allow the cutting operation through the approach of the blades.

In the embodiment described here, the system comprises motorized drive means 111, that can even be defined as a motorized movement device. Preferably, also the device 111 can be carried by an operator.

In the present example, the handling device 111 comprises a motorized gear 21 and a kinematic mechanism having a flexible element 22, for example a belt or a chain, dragged or draggable in motion, respectively, by a driving pulley 123, driven in use by the said motorized gear, and a driven pulley 24.

Preferably, the flexible element 22 has a fixing dowel 25, shaped in such a way as to allow the attachment of a rod 112 second end to the flexible element 22. The motorized movement device 111 also comprises a frame support, on which are fixed the above components and comprising in particular a reference element 27, for example shaped as an L. The reference element has an opening on one of its surfaces, through which the rod element 112 can slide. The fixing dowel 25 is rigidly coupled to the flexible element 22 and the rod 112 - preferably at the each other opposite ends - in such a way as to transmit a pulling or a release action on the rod element 112, in correspondence with a drive of said kinematic mechanism.

A sliding sheath 116 is fixed at its ends, respectively to the reference element 27 and the slotted element 108, in such a way as to allow a slide of the rod element 112 within the sheath itself during the operation of the movement device.

In particular, in correspondence with a removal of the fixing dowel 25 by the reference element 27, the rod element 112 is dragged by the fixing dowel itself, and through a slide inside the aforesaid sheath 116, and the fixing at the slot element 109, the tensile force of the rod 112 entails a closure of the handle 400 of the shears 200 with respect to the element 300.

Therefore, in use, the transmission motion generated by the aforesaid kinematic mechanism is transformed into an alternate motion of the rod 112 and through this is transmitted to the shears 200. In particular, for safety reasons, in this embodiment is not provided the contemporary actuation of the shears 200 by an operator.

The shears 200 comprises in this case a safety mask 31, adapted to contain the aforesaid first 300 and second 400 handle elements of elongated shape.

In particular, the safety mask 31 is integral with the first handle element 300, so as to allow a free moving of the element 400 with respect to the element 300.

The safety mask 31 has a gripping element 32 to allow the manipulation and, in particular, the guidance of the shear device 200 by an operator.

As anticipated above, the motorized device 111 is shaped in such a way as to be worn by the operator, for example, it can be contained in a backpack, as shown in Figure 7. Advantageously, in this way the operator works with a hand always free .

In the embodiments considered above - and as shown in Figures 5 and 7 - in a condition of not use the shears 2, 200 may be contained in a case, for example applicable to a work belt, so as to allow the best movement possibilities in any working condition.

Advantageously, the present invention also includes the provision of a kit 1000 or 2000 for the pruning. This kit 1000, 2000 includes a cutting system 1,100 and a work belt provided with the aforementioned case for the containment of the shear device 2, 200 in a non-operating configuration.

In particular, the kit 1000 for manual pruning (Figure 5) further comprises a case for containing the manual handling device 11, while in the kit 2000 for the motorized cutting (Figure 7) there is provided a backpack for holding the motorized movement device 111.

Referring to Figures 9 to 11, below is described a third embodiment of the present invention.

This further embodiment comprises a cutting system 1100 substantially obtained through an inversion of the kinematic chain of the cutting system 1 of the first embodiment of the invention.

With regard to the known elements of which will not be made a detailed description, reference is made to what has already been written previously in the description of the first embodiment and its variants. These components will be identified with the same numbering elements adopted previously.

Also in this further embodiment, the blades motion of the shears 2 is realized by manual operating means 1111, also defined as manual handling device. They, as anticipated, are configured in such a way as to form a kinematic chain reverse from that which was included in the first embodiment of the invention.

Indeed, as will be appreciated hereinafter, the element adapted to transfer motion from the manual handling device 1111 to the shears 2 is a sliding sheath 1116, in place of the rod element 12.

The manual actuation device 1111 is shaped to be gripped by the same operator, for example in the other hand with respect to that which actuates the shear device 2.

The device 1111 has a first 1113 and a second handle element 1114 of elongated shape. A rotable connection between the aforesaid elements is also provided.

This cutting system 1100 further comprises a rod element 1112, a sliding sheath 1116 and a slide guide element 1115, similar to those described previously.

The guide element 1115 creates a guide to the sliding of one of the two elements of the handle device 1111. For example, in this embodiment, the guide 1115 is fixed at a proximal end of the handle element 1114 and is adapted to guide the relative sliding of the element 1113 with respect to the element 1114 itself.

Referring to Figure 9, the rod element 1112 is connected or detachably connected in a fixed manner, for example at its first end, to the two ends of the guide element 1115 of the device 1111. The configuration is such that the rod element 1112 is fixed with respect to one of the handle elements, for example the element 1114, and slidably connected to the other of these elements, for example the element 1113, which can in fact slide on it when the device 1111 is actuated.

As in the first embodiment of the invention, the rod 1112 is also detachably connected or connectable, for example at a second end, to the said first 3 and second 4 handle element of the shears 2, at respective proximal ends of the elements themselves. The system configuration is such that the rod element 1112 is locked or lockable to one of the handle elements, for exemple the element 4, and slidingly connected to the other, for example the element 3.

The rod element 1112 is partially housed within the sliding sheath 1116.

The sheath 1116 is connected or detachably connected in a fixed manner at its ends, for example by means of locking elements, respectively at a proximal end of the handle element 3 of the shears 2 and at a proximal end of the element 1113 of the device 1111.

Furthermore, said sheath 1116 is further connected to the other handle element 1114 in a sliding manner, for example by means of a slot-type connection, in such a way as to slide freely on the rod element 1112.

In this embodiment, the rod element 1112 realizes a guide to the sheath 1116 sliding.

As shown in Figure 10 and 11, a movement of mutual approach of the element 1113 to the element 1114 of the manual handling device 1111 determines the application of a compressive force on the sheath 1116.

Due to the system configuration, said action of compression exerted on the sliding sheath 1116 determines a motion of approach and cutting of the blades of the shears 2, allowing the reduction the cutting force of the operator in using thereof.

In particular, the sliding sheath 1116 and the rod 1112 are dimensioned in such a way to allow a comfortable manual operation of the shears 2 and the device 1111 by an operator. Preferably, in use, the operator works with the sheath 1116 and the cable 1112 positioned below an operational altitude of the hands, allowing advantageously both to ensure comfortable working conditions and to reduce possible undesirable stresses on the operator limbs.

Also the manual handling device 1111 includes an elastic element of a known type, for example a spring, positioned between the handle elements, adapted to allow the repositioning of the same elements in an open configuration as a result of the closing action exerted by the operator.

For this embodiment is still provided the possibility of replacing the manual handling device 1111 with a motorized device, to switch from a manually operated cutting system to an automated cutting system, more performant.

The present invention has here been described with reference to preferred embodiments. It will be understood that there may be other embodiments afferent to the same inventive spirit, as defined by the scope of protection of the appended claims.

## Claims

1. A cutting system (1; 1100), in particular suitable for the pruning of a tree and/or a shrub, comprising:
- a shear device (2), having a first (3) and a second (4) handle element of elongated shape, each of them being rigidly coupled, at a distal end, to a respective first (5) or second (6) blade, which shear device (2) further has a rotatable connection between said handle elements such as to allow an actuation of said blades according to a movement of mutual approaching/cutting and of mutual spacing, corresponding to respective motions of mutual approach and spacing of said handle elements;
- an elongated actuation element (12; 1116) removably locked or lockable at a first end thereof to one of said first (3) and second (4) handle element at a proximal end of the latter, in such a way that a traction or compression action exerted on said elongated element (12; 1116) determines an approaching and cutting motion of said blades;
- a manual actuation device (11; 1111) of said elongated actuation element (12; 1116) apt to exert a traction or compression action on the elongated actuation element (12; 1116), which manual actuation device (11; 1111) is shaped to be gripped by an operator and comprises a further first (13; 1113) and second (14; 1114) handle element of elongated shape, to at least one of which said elongated actuation element (12; 1116) is removably locked or lockable at a second end thereof, which manual actuation device (11; 1111) further comprises a rotatable connection between said further first and second (13, 14; 1113, 1114) handle element, such as to allow an actuation of said elongated actuation element (12; 1116) following a mutual approach or a mutual spacing movement of said further handle elements.

2. The cutting system (1) according to the preceding claim, wherein said elongated actuation element (12) is removably locked at a proximal end of said further first handle element (14) of said manual actuation device (11) and is also slidably connected to a proximal end of said second handle element (4).

3. The cutting system (1100) according to claim 1, wherein said elongated actuation element (1116) is removably locked at a proximal end of said further first handle element (1113) of said manual actuation device (1111), and is also slidably connected to a proximal end of said further second handle element (1114).

4. The cutting system (1; 1100) according to any one of the preceding claims, wherein said manual actuation device (11; 1111) comprises a guide element (15; 1115) locked at a proximal end of one of said further handle elements (13, 14; 1113, 1114) of said manual actuation device (11; 1111), said guide element (15; 1115) being apt to guide the sliding of the other one of said further handle elements.

5. The cutting system (1; 1100) according to any one of the preceding claims, wherein said actuation device (11; 1111) comprises a further safety flap (28) for locking said rotatable connection between said further first (13 ; 1113) and second (14; 1114) handle element.

6. A cutting system (100), in particular suitable for the pruning of a tree and/or a shrub, comprising:
- a shear device (200), having a first (300) and a second (400) handle element of elongated shape, each fixed, at a distal end thereof, to a respective first (500) or second (600) blade, which shear device (200) further has a rotable connection between said handle elements such as to allow an actuation of said blades according to a motion of mutual approach/cutting and mutual spacing, corresponding to respective motions of mutual approaching and spacing of said handle elements;
- an elongated actuation element (12; 1116) removably locked or lockable at a first end thereof to one of said first (300) and second (400) handle element at a respective proximal end of the latter, so that a traction or compression action exerted on said elongated actuation element (12; 112; 1116) determines an approaching and cutting motion of said blades;
- a motorized actuation device (111) of said elongated actuation element (12; 112; 1116) apt to exert a traction or compression action on the elongated actuation element (12; 112; 1116), which actuation device (111) comprises a motorized gear (21) and a kinematic mechanism having a flexible element (22), belt or chain, dragged or draggable in motion by a pulley, said pulley (23) being driven by said motorized gear.

7. The cutting system (100) according to the preceding claim, wherein said flexible element has a fixing dowel (25) for fixing a second end of said elongated actuation element (12; 112; 1116) to the flexible element (22) in such a way as to transmit a pulling or a release action on the elongated actuation element (12; 112; 1116) at a said kinematic mechanism actuation.

8. The cutting system (1; 100; 1100) according to any one of the preceding claims, wherein said shear device (2; 200) comprises a cover-blade element (19).

9. The cutting system (1; 100; 1100) according to any one of the preceding claims, wherein said shear device (2; 200) comprises a safety flap (18) for blocking said rotable connection between said handle elements.

10. The cutting system (1; 100; 1100) according to any one of the preceding claims, wherein said elongated actuation element (12; 112; 1116) is a rod element, in particular a cable, or a sheath.

11. The cutting system (1; 100; 1100) according to any one of the preceding claims, wherein said elongated actuation element (12; 112; 1116) is a flexible element, in particular a cable or a sheath.

12. The cutting system (1; 100; 1100) according to any one of the preceding claims, wherein said shear device (2; 200) comprises a safety mask (31) apt to contain said first (3; 300) and second (4; 400) handle element of elongated shape.

13. The cutting system (1; 100; 1100) according to the preceding claim, wherein said safety mask (31) is fixed with said first (3; 300) handle element.

14. The cutting system (1; 100; 1100) according to the claim 12 or 13, wherein said safety mask (31) presents a gripping element (32) to allow the manipulation of said shear device (2; 200) by an operator.

15. A cutting kit (1000, 2000) comprising a cutting system (1,100,1100) according to any one of the preceding claims and a work belt having a case for the containment of said shear device (2; 200) in a non-use configuration.

16. The cutting kit (1000) according to the preceding claim, further comprising a case for the containment of said manual actuation device (11, 1111).

17. The cutting kit (2000) according to claim 15, comprising a backpack for the containment of said motorized actuation device (111).
